# EUROPEAN PATENT APPLICATION

(11) **EP 1 759 599 A1**
(43) Date of publication of application: **07.03.2007**
(21) Application number: 05736531.4
(22) Date of filing: 28.04.2005
(51) Int. Cl.: A23L 3/3571, A21D 13/00

(54) **METHOD OF IMPROVING STORABILITY OF FOOD OR BEVERAGE**

(30) Priority: 30.04.2004 JP 2004136645; 30.04.2004 JP 2004136645
(71) Applicant: Kyowa Hakko Food Specialties Co., Ltd., Tokyo 100-8185 (JP)
(72) Inventor: SUENAGA, Arata., c/o Food Creation Centre, Ibaraki 300-0398 (JP); ITOH, Takayuki., c/o Food Creation Centre, Ibaraki 300-0398 (JP); IMURA, Toshiaki., c/o Food Creation Centre, Ibaraki 300-0398 (JP)
(74) Representative: Vossius & Partner
(86) International application number: PCT/JP2005/008126
(87) International publication number: WO 2005/104879

(57) **Abstract**

The present invention relates to an agent for improving the keeping quality of food and drink, comprising a lipase-treated matter of a reaction product obtained by reacting the cells of a lactic acid bacterium with oil and fat in an aqueous medium, a method for improving the keeping quality of food and drink by adding the treated matter, a method for producing food and drink which comprises adding the treated matter to food and drink, and food and drink obtained according to the production method

According to the present invention, an agent for improving the keeping quality of food and drink having good flavor, a method for improving the keeping quality of food and drink, food and drink having improved keeping quality, and a method for producing the food and drink can be provided.

## Description

### Technical Field

The present invention relates to food and drink, an agent for improving the keeping quality of food and drink, a method for improving the keeping quality of food and drink, and a method for producing food and drink.

### Background Art

Addition of preservatives is one of the methods for preventing putrefaction of foods and drinks by microorganisms.

As preservatives, chemically synthesized compounds such as benzoic acid or its sodium salt, sorbic acid or its potassium salt, sodium dehydroacetate, paraoxybenzoic acid esters, and propionic acid or its calcium or sodium salt are used.

However, among chemically synthesized compounds, there are some that have toxicity, though having antifungal activity, such as benzoic acid, benzoic acid derivatives, sorbic acid and sorbic acid derivatives; some that have low toxicity but may deteriorate the flavor of food and drink depending upon the amount used or the kind of food and drink; and further some that influence the productivity of food and drink in certain cases.

Organic acids such as acetic acid, sodium acetate and propionic acid, ethanol, sugar alcohols and the like are used to serve as a preservative. In bread making, for example, sodium acetate is used to serve as a preservative.

However, organic acids, ethanol and sugar alcohols also may influence foods and drinks depending upon the amount used.

In addition to chemically synthesized compounds, natural substances such as storax extract, Artemisia capillaries extract, milt protein, pectin hydrolyzate, Magnolia obovata extract, ε-polylysine and forsythia extract are also used. However, such natural substances generally have poor activity against fungi such as molds.

On the other hand, it is known that lactic acid bacteria which have been used for food and drink from a long time ago produce substances having antibacterial and antifungal activities. Examples of known substances produced by lactic acid bacteria and having antifungal activity include acetic acid, caproic acid, formic acid, propionic acid, butyric acid, valeric acid, sorbic acid and benzoic acid, and their derivatives (see non-patent publication Nos. 1 and 2), protein-like substances (see non-patent publication No. 3), 4-hydroxyphenyl lactic acid (see non-patent publication No. 4) and thermostable non-organic acid substances (see patent publication No. 1).

However, caproic acid, for example, which is considered to be the main component of an antifungal substance produced by Lactobacillus sanfrancisco CB1, one of lactic acid bacteria (see non-patent publication No. 1), may deteriorate the flavor of food and drink when added to the food and drink in large quantities.
Patent publication No. 1:
   Japanese Published Unexamined Patent Application No. 291466/2002
Non-patent publication No.1:
   Applied Microbiology and Biotechnology, 1998, Vol. 50, p. 253-256
Non-patent publication No. 2:
   Food Microbiology and Safety, 2002, Vol. 67, p. 2271-2277
Non-patent publication No. 3:
   Applied and Environmental Microbiology, 2001, Vol. 67, p. 1-5
Non-patent publication No. 4:
   Applied and Environmental Microbiology, 2000, Vol. 66, p. 4084-4090

### Disclosure of the Invention

### Problems to be Solved by the Invention

An object of the present invention is to provide an agent for improving the keeping quality of food and drink having good flavor, a method for improving the keeping quality of food and drink, food and drink having improved keeping quality and a method for producing the food and drink.

### Means for Solving the Problems

The present invention relates to the following (1) to (23).
(1) An agent for improving the keeping quality of food and drink, which comprises a lipase-treated matter of a reaction product obtained by reacting the cells of a lactic acid bacterium with oil and fat in an aqueous medium.
(2) The agent for improving the keeping quality according to (1), wherein the aqueous medium comprises raw milk, skim milk powder or whole milk powder.
(3) The agent for improving the keeping quality according to (1) or (2), wherein the lactic acid bacterium is one or more kinds of lactic acid bacteria selected from the group consisting of the genera Lactobacillus, Lactococcus, Streptococcus, Leuconostoc, Pediococcus, Enterococcus and Tetragenococcus.
(4) The agent for improving the keeping quality according to any of (1) to (3), wherein the oil and fat is butter.
(5) The agent for improving the keeping quality according to any of (1) to (4), wherein the food and drink is bread.
(6) The agent for improving the keeping quality according to any of (1) to (5), wherein the agent for improving the keeping quality is an anti-mold agent.
(7) A food and drink containing the agent for improving the keeping quality according to any of (1) to (6).
(8) A method for improving the keeping quality of food and drink, which comprises adding, to the food and drink, a lipase-treated matter of a reaction product obtained by reacting the cells of a lactic acid bacterium with oil and fat in an aqueous medium.
(9) The method according to (8), wherein the aqueous medium comprises raw milk, skim milk powder or whole milk powder.
(10) The method according to (8) or (9), wherein the lactic acid bacterium is one or more kinds of lactic acid bacteria selected from the group consisting of the genera Lactobacillus, Lactococcus, Streptococcus, Leuconostoc, Pediococcus, Enterococcus and Tetragenococcus.
(11) The method according to any of (8) to (10), wherein the oil and fat is butter.
(12) The method according to any of (8) to (11), wherein the food and drink is bread.
(13) The method according to any of (8) to (12), wherein the method for improving the keeping quality is an anti-mold method.
(14) A method for producing food and drink, which comprises adding, to the food and drink, a lipase-treated matter of a reaction product obtained by reacting the cells of a lactic acid bacterium with oil and fat in an aqueous medium.
(15) The method according to (14), wherein the aqueous medium comprises raw milk, skim milk powder or whole milk powder.
(16) The method according to (14) or (15), wherein the lactic acid bacterium is one or more kinds of lactic acid bacteria selected from the group consisting of the genera Lactobacillus, Lactococcus, Streptococcus, Leuconostoc, Pediococcus, Enterococcus and Tetragenococcus.
(17) The method according to any of (14) to (16), wherein the oil and fat is butter.
(18) The method according to any of (14) to (17), wherein the food and drink is bread.
(19) A food and drink obtained by the method according to any of (14) to (18).
(20) A bread comprising a lipase-treated matter of a reaction product obtained by reacting the cells of a lactic acid bacterium with oil and fat in an aqueous medium.
(21) The bread according to (20), wherein the aqueous medium comprises raw milk, skim milk powder or whole milk powder.
(22) The bread according to (20) or (21), wherein the lactic acid bacterium is one or more kinds of lactic acid bacteria selected from the group consisting of the genera Lactobacillus, Lactococcus, Streptococcus, Leuconostoc, Pediococcus, Enterococcus and Tetragenococcus.
(23) The bread according to any of (20) to (22), wherein the oil and fat is butter.

### Effect of the Invention

According to the present invention, an agent for improving the keeping quality of food and drink having good flavor, food and drink having improved keeping quality and a method for producing the food and drink can be provided.

### Brief Description of the Drawings

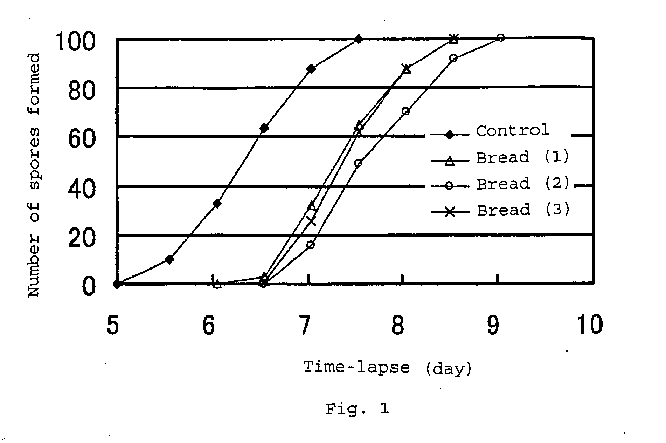

Fig. 1: Fig. 1 shows time-lapse changes in the number of spots where sporulation was observed in control bread and Bread (1) to (3) onto which a suspension of the spores of Penicillium expansum ATCC 1117 was spotted. The numbers on the abscissa indicate the time lapse (day) after spotting and those on the ordinate indicate the number of spots where sporulation was observed. The starting point of the abscissa is the time when the first sporulation was observed. The total number of the spots is 100, which is the total of those on 4 slices of bread.

In the graph, "◆" shows the control bread, "Δ" shows Bread (1), "○" shows Bread (2) and "×" shows Bread (3).

### Best Modes for Carrying Out the Invention

The agent for improving the keeping quality according to the present invention is obtained by reacting the cells of a lactic acid bacterium with oil and fat in an aqueous medium, preferably an aqueous medium containing raw milk, skim milk powder or whole milk powder, and treating the obtained reaction product with lipase.

Examples of the lactic acid bacteria used in the present invention are microorganisms belonging to the genera Lactobacillus, Lactococcus, Streptococcus, Leuconostoc, Pediococcus, Enterococcus and Tetragenococcus, and, for example, those belonging to the genera Lactobacillus and Streptococcus are preferably used. These microorganisms may be used either alone or in combination of two or more kinds.

Examples of the microorganisms belonging to the genus Lactobacillus are those belonging to Lactobacillus acidophilus, Lactobacillus bulgaricus, Lactobacillus brevis, Lactobacillus plantarum, Lactobacillus sanfranciscencis, Lactobacillus sanfrancisco, Lactobacillus italicus, Lactobacillus casei, Lactobacillus delbrueckii and Lactobacillus helveticus; examples of the microorganisms belonging to the genus Lactococcus are those belonging to Lactococcus lactis; examples of the microorganisms belonging to the genus Streptococcus are those belonging to Streptococcus thermophilus and Streptococcus salivarius; examples of the microorganisms belonging to the genus Leuconostoc are those belonging to Leuconostoc cremoris; examples of the microorganisms belonging to the genus Pediococcus are those belonging to Pediococcus acidilactici; examples of the microorganisms belonging to the genus Enterococcus are those belonging to Enterococcus faecalis; and examples of the microorganisms belonging to the genus Tetragenococcus are those belonging to Tetragenococcus halophilus.

Among these microorganisms, Lactobacillus bulgaricus, Lactobacillus acidophilus, Lactobacillus casei, Lactobacillus plantarum, Lactococcus lactis and Streptococcus thermophilus, for example, are preferably used, and Lactobacillus bulgaricus and Streptococcus thermophilus are more preferably used.

As the microorganisms, dry cells commercially available as a starter culture for fermented milk products such as cheese and yogurt, treated matters of a culture obtained by carrying out culturing, for example, according to the method shown in (2) below, and the like can be used.

The treated matters of a culture include concentrated culture, dried culture, cells obtained by centrifuging the culture, and dried products and freeze-dried products of the cells.

The oil and fat used in the present invention may be any of oils and fats usually used for food and drink, but animal oils and fats and vegetable oils and fats are preferably used.

Examples of animal oils and fats are milk fats, beef tallow and lard. Among them, milk fats are preferably used. Examples of milk fats are those derived from cow, sheep, goat and buffalo.

Examples of vegetable oils and fats are coconut oil, palm oil, palm kernel oil, rapeseed oil, soybean oil, corn oil, rice bran oil, safflower oil, sesame oil, cottonseed oil, olive oil, sunflower oil and peanut oil. Among them, coconut oil, palm oil and palm kernel oil are preferably used, and coconut oil is more preferably used.

The animal oil and fat and vegetable oil and fat may be prepared according to conventional methods, and commercially available products thereof may also be used. The animal oil and fat and vegetable oil and fat may be used either alone or in combination.

The reaction of the cells of a lactic acid bacterium with oil and fat in an aqueous medium is carried out, for example, according to methods such as (1) a method in which the cells of a lactic acid bacterium and oil and fat are added to an aqueous medium to carry out reaction of the cells of the lactic acid bacterium with the oil and fat, and (2) a method in which oil and fat is added to a culture of a lactic acid bacterium to carry out reaction of the cells of the lactic acid bacterium with the oil and fat.

### (1) Method in which the cells of a lactic acid bacterium and oil and fat are added to an aqueous medium to carry out reaction of the cells of the lactic acid bacterium with the oil and fat

The aqueous medium used in the present invention may be an aqueous medium with any components or of any composition so long as it does not inhibit reaction of the cells of a lactic acid bacterium with oil and fat. Examples of the aqueous medium are water and buffers such as phosphate buffer, carbonate buffer, acetate buffer, borate buffer, citrate buffer and Tris buffer. It may also contain alcohols such as ethanol.

Further, as the aqueous medium, any of natural media or synthetic media may be used so long as it is a liquid medium containing carbon sources, nitrogen sources, inorganic salts and the like that can be assimilated by a lactic acid bacterium.

As the carbon sources, any carbon sources that can be assimilated by the bacteria can be used. Examples of the carbon sources are carbohydrates such as glucose, fructose, sucrose, molasses containing them, starch and starch hydrolysate, organic acids such as acetic acid and propionic acid, and alcohols such as ethanol and propanol.

Examples of the nitrogen sources are ammonia, ammonium salts of inorganic and organic acids such as ammonium chloride, ammonium sulfate, ammonium acetate and ammonium phosphate, other nitrogen-containing compounds, peptone, meat extract, yeast extract, corn steep liquor, casein hydrolysate, soybean cake, soybean cake hydrolysate, and various fermented cells and their digested products.

Examples of the inorganic salts are potassium dihydrogenphosphate, dipotassium hydrogenphosphate, magnesium phosphate, magnesium sulfate, sodium chloride, ferrous sulfate, manganese sulfate, copper sulfate and calcium carbonate.

It is preferred that the aqueous medium contains raw milk such as cow's milk, mare's milk, goat's milk and sheep's milk, skim milk powder or whole milk powder.

Raw milk is preferably contained in an amount of more than 100 parts by weight per 100 parts by weight of the aqueous medium. Raw milk may be used as the aqueous medium as it is.

Skim milk powder or whole milk powder is contained preferably in an amount of 1 to 70 parts by weight, more preferably in an amount of 10 to 50 parts by weight per 100 parts by weight of the aqueous medium.

Although the amount of oil and fat to be added to the aqueous medium is not particularly limited, oil and fat is added preferably in an amount of 100 to 900 parts by weight, more preferably in an amount of 100 to 300 parts by weight per 100 parts by weight of the aqueous medium.

The amount of the cells of a lactic acid bacterium to be added to the aqueous medium is not particularly limited, but the amount of addition is preferably 1 x 10⁴ to 1 x 10⁸ cells, more preferably 1 x 10⁵ to 1 x 10⁸ cells, further preferably 5 x 10⁵ to 1 x 10⁸ cells per gram of the aqueous medium to which oil and fat has been added.

It is preferred that the reaction temperature is in the vicinity of optimum temperature for the lactic acid bacterium used and at the same time higher than the melting point of the oil and fat used. For example, the reaction temperature is preferably 10 to 50°C, more preferably 20 to 50°C, further preferably 40 to 50°C.

The reaction time is usually 4 hours to 10 days, preferably 12 to 24 hours.

The pH of the aqueous medium during reaction is usually pH 2 to 11, preferably pH 3 to 10, and more preferably pH 4 to 8. Adjustment of the pH is carried out using an inorganic or organic acid, an alkali solution, urea, calcium carbonate, ammonium carbonate or the like according to need.

### (2) Method in which oil and fat is added to a culture of a lactic acid bacterium to carry out reaction of the cells of the lactic acid bacterium with the oil and fat

Reaction of the cells of a lactic acid bacterium with oil and fat in an aqueous medium can be carried out by adding the oil and fat to the culture when the lactic acid bacterium is cultured using the aqueous medium described in (1) above, preferably a liquid medium, as a culture medium.

Although the culturing temperature is not restricted so long as it falls within the condition under which a lactic acid bacterium can grow, the temperature before the addition of oil and fat is preferably 10 to 50°C, more preferably 20 to 43°C, further preferably 25 to 37°C. After the addition of oil and fat, it is preferred that the reaction is carried out at a temperature in the vicinity of optimum temperature of the lactic acid bacterium used and at the same time higher than the melting point of the oil and fat used. For example, the reaction temperature is preferably 10 to 50°C, more preferably 20 to 50°C, further preferably 40 to 50°C.

The culturing time is usually 4 hours to 3 days, preferably 12 to 24 hours.

The culturing pH is usually pH 2 to 11, preferably pH 3 to 10, and more preferably pH 4 to 8.

Adjustment of the pH is carried out using an inorganic or organic acid, an alkali solution, urea, calcium carbonate, ammonium carbonate or the like according to need.

Although the amount of the oil and fat to be added is not particularly limited, it is added preferably in an amount of 100 to 900 parts by weight, more preferably 100 to 300 parts by weight per 100 parts by weight of the culture medium.

The oil and fat may be added to the culture medium before the start of culturing or may be added to the culture after the start of culturing. It is preferred that the oil and fat is added to the medium or the culture when the amount of the cells contained in one gram of the medium or the culture to which the oil and fat is to be added reaches preferably 1 x 10⁴ to 1 x 10⁸ cells, more preferably 1 x 10⁵ to 1 x 10⁷ cells, further preferably 5 x 10⁵ to 5 x10⁶ cells.

The reaction of the cells of a lactic acid bacterium with oil and fat in the methods of (1) and (2) above can be carried out by allowing the reaction mixture to stand, or with stirring or shaking.

After the completion of reaction between the cells of a lactic acid bacterium and oil and fat, the reaction mixture or culture may be treated with lipase as it is, or its concentrated or dried product may be subjected to lipase treatment.

As lipase to be used for the lipase treatment, any lipase can be used such as animal-derived or microorganism-derived lipases so long as it has triacylglycerol lipase (E.C.3.1.1.3) activity.

Examples of animal-derived lipases are pig kidney-derived lipase and lipase derived from the pharynx of sheep, cow or goat.

Examples of microorganism-derived lipases are those derived from microorganisms belonging to the genera Mucor, Rizopus, Candida, Aspergillus, Arthrobacter, Pseudomonas and Chromobacterium.

These lipases may be prepared according to conventional methods, and commercially available lipases may also be used.

Although lipase may be a purified product, matters containing the enzyme such as a culture of a microorganism having triacylglycerol lipase activity, treated matters of the culture, cells and tissues of animals and plants having triacylglycerol lipase activity, a culture thereof and treated matters of the culture may also be used as lipase.

The treated matters of a culture include concentrated culture, dried culture, cells obtained by centrifuging the culture, and products obtained by treating the cells by various means such as drying, freeze-drying, treatment with a surfactant, ultrasonication, mechanical friction, treatment with a solvent, enzymatic treatment, protein fractionation and immobilization.

The activity of lipase can be measured, for example, according to the method of measuring glycerol formed by decomposition [J. Biol. Chem., 235, 1912-1916 (1960)]; the method of titrating free fatty acid [J. Biochem., 61, 313-319 (1967)]; and the method of measuring the radioactivity of fatty acid liberated from a labeled substrate [J. Clin. Invest., 59, 185-192 (1977)]. One unit (hereinafter noted as "U") of enzyme activity for lipase is defined as the amount of enzyme which forms 1 *µ*mol of fatty acid in one minute when the enzyme activity is measured in accordance with the method described in Oil Chemistry, 1987, Vol. 36, p. 821.

The lipase treatment is carried out by adding lipase to a reaction product obtained by reacting the cells of a lactic acid bacterium with oil and fat in an aqueous medium, preferably followed by emulsification treatment using a homogenizer or the like, and keeping the resulting mixture at a predetermined temperature for a predetermined period of time.

The amount of lipase to be added varies depending upon the kind of oil and fat, treatment conditions, etc. Usually, 20 to 2000 U, preferably 200 to 1600 U, more preferably 300 to 1300 U of lipase is added per gram of oil and fat.

The lipase treatment may be carried out at any temperature so long as lipase can show triacylglycerol lipase activity. The temperature of lipase treatment varies depending upon the kind of lipase and that of oil and fat, and is preferably in the vicinity of optimum temperature for the lipase used and at the same time higher than the melting point of the oil and fat used. For example, the temperature is preferably 20 to 50°C, more preferably 40 to 50°C.

The pH for the lipase treatment varies depending upon the kind of lipase and that of oil and fat used, and is preferably adjusted to pH 2 to 8, and more preferably adjusted to pH 3 to 7.

The treatment time varies depending upon the kind of lipase and that of oil and fat used, and is 2 to 120 hours, preferably 48 to 72 hours.

The lipase treatment is carried out by allowing the mixture to stand, or with stirring or shaking.

After the lipase treatment, the resulting liquid may be used as it is. It is preferred, however, to carry out heat treatment at 50 to 100°C, preferably 60 to 90°C for 5 to 60 minutes to inactivate lipase.

The lipase-treated matter may be used as the agent for improving the keeping quality of the present invention either as it is or after heat treatment, or may be concentrated or dried for use as the agent for improving the keeping quality of the present invention. The lipase-treated matter may be subjected to removal of the cells, etc., if necessary after heat treatment, using a solid-liquid separation method such as separation by precipitation, cake filtration, clarifying filtration, centrifugal filtration, centrifugal precipitation, pressing, separation, or a method using a filter press and, if necessary, further subjected to concentration or drying to be used as the agent for improving the keeping quality of the present invention.

The methods of concentration include concentration by heating, freeze concentration, concentration by reverse osmosis and concentration under reduced pressure, and concentration under reduced pressure is preferably used.

The methods of drying include freeze-drying, natural air drying, hot-air drying, air circulation drying, ventilation drying, spray drying, drying under reduced pressure, sun drying, vacuum drying, spray drying, fluidized bed drying, foam-mat drying, film drying such as drying with drum dryer, the ultrasonic drying method and the electromagnetic wave drying method. Among them, concentration under reduced pressure, spray drying and freeze-drying are preferably used.

The agent for improving the keeping quality of food and drink of the present invention may be used as an anti-mold agent or an antiseptic agent, and is preferably used as an anti-mold agent.

By adding the agent for improving the keeping quality of the present invention, it is possible to suppress the growth of microorganisms such as bacteria, yeast and fungi to improve the keeping quality of food and drink. In particular, the growth of fungi of the genera Aspergillus, Penicillium, etc. can be effectively suppressed.

The addition of the agent to food and drink may be done at any stage of the production process of the food and drink.

The amount of the agent added to food and drink is 0.01 to 20 parts by weight, preferably 0.05 to 10 parts by weight as the lipase-treated matter of the reaction product obtained by reacting the cells of a lactic acid bacterium with oil and fat in an aqueous medium per 100 parts by weight of the food and drink.

The agent for improving the keeping quality may be added to any foods and drinks including, for example, bread such as one-loaf bread, rolls, hard bread, sweetened bun and cooked bread; confectionery and snacks such as rice crackers, potato chips and cookies; noodles such as Somen (Japanese fine wheat noodle), Hiyamugi (Japanese fine wheat noodle thicker than Somen), Udon (Japanese wheat noodle), Soba (Japanese buckwheat noodle) and Chinese noodle; seasonings such as miso (soybean paste), soy sauce, sauce, soup stock, dressing, mayonnaise and tomato ketchup; soups such as Japanese clear soup, consommé soup, egg soup, wakame seaweed soup, shark fin soup, potage and miso soup; soups and sauces for noodles; cooked rice products such as rice gruel, porridge of rice and vegetables, and rice with hot tea or hot water poured on it; processed livestock products such as ham, sausages and cheese; processed marine products such as steamed fish paste, dried marine products, salted and fermented fish products, and various kinds of processed marine products suitable for accompaniments for a drink; processed vegetable products such as pickles; and cooked foods such as boiled foods, fried foods, grilled foods and curry. The agent is preferably used for foods and drinks the flavor of which is improved by the addition of oil and fat. An example of food and drink the flavor of which is improved by the addition of oil and fat is bread.

The food and drink may be in the form of powdered food, sheet-shaped food, bottled food, canned food, retort pouch food, encapsulated food, tablet food, fluid food, nutritional drink or the like.

Except for adding the agent for improving the keeping quality of the present invention to food and drink, the food and drink can be produced using ordinary production methods of food and drink.

The food and drink to which the agent for improving the keeping quality of the present invention is added can also be produced, for example, by using granulating methods such as fluidized bed granulation, stirring granulation, extrusion granulation, rolling granulation, air stream granulation, compression molding granulation, crushing granulation, spray granulation and jet granulation; coating methods such as pan coating, fluidized bed coating and dry coating; puffing methods such as puff drying, excess vapor method, foam-mat method and microwave-heating method; and extrusion methods using an extrusion granulator or an extruder.

As an example of the food and drink to which the agent for improving the keeping quality of the present invention is added, bread is mentioned, and an example of a method for making bread is shown below.

For making bread, ordinary bread making methods are used except for adding the agent for improving the keeping quality of the present invention to dough.

There are two kinds of typical methods for making one-loaf bread, sweetened bun, etc.; that is, the straight dough method and the sponge and dough method. The former is a method in which all the ingredients of dough are mixed at a time, and the latter is a method in which at first a sponge is made by adding yeast and water to a part of grain flour and, after fermentation, the remaining ingredients are added to the sponge.

However, the methods for making bread are not limited to these.

Examples of the ingredients of dough are grain flours, usually wheat flour, yeast, salt and water, and, if necessary, sugar, skim milk powder, egg, yeast food, shortening, butter and the like are used.

In the straight dough method, all the ingredients of dough are mixed and kneaded, and the kneaded mixture is fermented at 25 to 30°C for 20 minutes to 4 hours. The fermented dough is then subjected to the following steps: dividing, benching, molding, proofing (25 to 42°C) and baking (170 to 240°C).

In the sponge and dough method, about 30wt% to 100wt% of the grain flour to be used, yeast, yeast food and the like are mixed and kneaded with water to obtain a sponge. The obtained sponge is fermented at 25 to 35°C for 1 to 5 hours, and then mixed and kneaded with the remaining ingredients such as grain flour, water, salt, sugar, skim milk powder, shortening, egg, butter and the like (dough mixing). The resulting dough is further fermented at 25 to 30°C for 20 minutes to 2 hours and then subjected to dividing, benching, molding, proofing (25 to 42°C) and baking (170 to 240°C).

The agent for improving the keeping quality of the present invention may be added at any stage of the bread making process.

For example, in the case of the straight dough method, the agent may be added to the ingredients of dough before preparing dough, or may be added at the time of mixing and kneading of dough after the ingredients are mixed. In the case of the sponge and dough method, the agent may be added to the ingredients before preparing a sponge, at the time of mixing and kneading of a sponge, or to dough at the time of dough mixing after preparation of a sponge.

Although the amount of the agent for improving the keeping quality of the present invention to be added to bread is not particularly limited, usually 0.01 to 20 parts by weight, preferably 0.05 to 10 parts by weight thereof is added per 100 parts by weight of the grain flour which is an ingredient of dough.

Examples of the present invention are shown below.

### Example 1

Salt-free butter (300 g, manufactured by Snow Brand Milk Products Co., Ltd.), 35 g of skim milk powder (manufactured by Takanashi Milk Products Co., Ltd.) and 165 ml of water were mixed, and the mixture was maintained at 85°C for 10 minutes to carry out heat sterilization. After the treatment, the mixture was allowed to stand, and when the temperature fell to 43°C, 10 mg of a freeze-dried product of lactic acid bacteria consisting of Lactobacillus bulgaricus and Streptococcus thermophilus (DPL612-GRB, manufactured by Kyowa Hi Foods Co., Ltd.) was added and mixed. The mixture was allowed to stand at 43°C for 20 hours to carry out reaction to obtain a reaction product.

To the reaction product was added 150,000 U of lipase derived from a microorganism of the genus Candida (Lipase AY "AMANO" 30G, manufactured by Amano Pharmaceutical Co., Ltd.), followed by mixing. The resulting liquid mixture was then emulsified using a homogenizer. The emulsion was allowed to stand at 42°C for 72 hours to carry out lipase treatment. After the lipase treatment, the emulsion was heated at 80°C for 30 minutes to inactivate lipase to obtain 500 g of lipase-treated matter of oil and fat (hereinafter also referred to as "agent for improving the keeping quality A").

### Comparative Example 1

Lipase-treated matter of oil and fat (500 g, hereinafter also referred to as "agent for improving the keeping quality B") was obtained in the same manner as in Example 1 except that the lactic acid bacteria were not added to be reacted.

### Example 2

Strong flour (700 g, Camellia flour, manufactured by Nisshin Flour Milling Inc.), 20 g of yeast (DIA Yeast, manufactured by Kyowa Hakko Kogyo Co., Ltd.), 1 g of yeast food (PAN DIA C-500, manufactured by Kyowa Hakko Kogyo Co., Ltd.) and 420 g of water were mixed together. The obtained mixture was kneaded using a bread mixer (SS-71E, manufactured by Kanto Kongoki Kogyo Co., Ltd.) at a low speed for 3 minutes and at a medium high speed for 2 minutes so that the temperature of the resulting dough was 24°C, and the obtained dough was fermented at 28°C for 4 hours. The dough thus obtained is designated as dough (I).

To dough (I) were added 300 g of strong flour, 50 g of sugar, 20 g of salt, 20 g of skim milk powder and 260 g of water, and the mixture was kneaded at a low speed for 3 minutes and at a medium high speed for 4 minutes. Then, 50 g of shortening was further added to the kneaded dough, and the mixture was kneaded at a low speed for 2 minutes, at a medium high speed for 3 minutes and at a high speed for 4 minutes so that the temperature of the resulting dough was 28°C. The dough thus obtained is designated as dough (II).

Dough (II) was allowed to stand at 25 to 28°C for 20 minutes and then divided to obtain 4 pieces of 220 g each. The 4 pieces of dough were rounded and allowed to stand at 25 to 28°C for 20 minutes, followed by punching. Then, each piece of dough was put in a two-loaf bread mold (Pullman) and fermented at 38°C at 85% relative humidity until the volume of the dough reached 80% of that of the mold. The dough thus obtained is designated as dough (III).

Dough (III) was baked at 210°C for 28 minutes using an oven (Reel Oven 608MS, manufactured by Sanko Machinery Co., Ltd.) to make bread.

The thus obtained bread was used as control in the following test examples.

Loaves of bread were made according to the same process as that of making the control bread except that in the step of making dough (II): 0.1 g of caproic acid was added to dough (I) to make Bread (1); 5.0 g of the agent for improving the keeping quality A was added to dough (I) to make Bread (2); and 5.0 g of the agent for improving the keeping quality B was added to dough (I) to make Bread (3).

### Example 3

Salt-free butter (300 g, manufactured by Snow Brand Milk Products Co., Ltd.), 35 g of skim milk powder (manufactured by Takanashi Milk Products Co., Ltd.) and 165 ml of water were mixed, and the mixture was maintained at 85°C for 10 minutes to carry out heat sterilization. After the treatment, the mixture was allowed to stand, and when the temperature fell to 43°C, 50 mg of a freeze-dried product of lactic acid bacteria consisting of Lactobacillus bulgaricus and Streptococcus thermophilus (DPL612-GRB, manufactured by Kyowa Hi Foods Co., Ltd.) was added and mixed. The mixture was allowed to stand at 43°C for 12 hours to carry out reaction. After the completion of reaction, the resulting mixture was maintained at 85°C for 10 minutes to carry out sterilization and enzyme-inactivation treatment.

After the sterilization and enzyme-inactivation treatment, 375,000 U of lipase derived from a microorganism of the genus Candida (Lipase AY "AMANO" 30G, manufactured by Amano Pharmaceutical Co., Ltd.) was added and mixed. The resulting liquid mixture was then emulsified using a homogenizer. The emulsion was allowed to stand at 42°C for 30 hours to carry out lipase treatment. After the lipase treatment, the emulsion was heated at 80°C for 30 minutes to inactivate lipase to obtain 500 g of lipase-treated matter of oil and fat (hereinafter also referred to as "agent for improving the keeping quality C").

### Comparative Example 2

Skim milk powder (35 g, manufactured by Takanashi Milk Products Co., Ltd.) and 165 ml of water were mixed and maintained at 85°C for 10 minutes to carry out heat sterilization treatment. After the treatment, the resulting mixture was allowed to stand, and when the temperature fell to 43°C, 50 mg of a freeze-dried product of lactic acid bacteria consisting of Lactobacillus bulgaricus and Streptococcus thermophilus (DPL612-GRB, manufactured by Kyowa Hi Foods Co., Ltd.) was added and mixed. The mixture was allowed to stand at 43°C for 12 hours to carry out culturing. After the completion of culturing, 300 g of salt-free butter was added thereto, and the mixture was promptly maintained at 85°C for 10 minutes to carry out sterilization and enzyme-inactivation treatment. After the sterilization treatment, lipase treatment was carried out in the same manner as described in Example 3 to obtain 500 g of lipase-treated matter of oil and fat (hereinafter also referred to as "agent for improving the keeping quality D").

### Example 4

Bread (4) was made in the same manner as in Example 2 except for adding the agent for improving the keeping quality C obtained in Example 3 to dough (I) obtained in Example 2, and Bread (5) was made according to similar steps except for adding the agent for improving the keeping quality D obtained in Comparative Example 2 to dough (I).

### Test Example 1

(a) Sensory evaluation was conducted on the control bread and Bread (1) to (3) obtained in Example 2 with respect to the aroma by 15 skilled panelists using 5-point scoring system.
Evaluation was carried out based on the following criteria with the aroma of the control bread designated as 3 points, and t-test was conducted.
5 points: Aroma particularly favorable
4 points: Aroma favorable
3 points: Aroma almost equal to that of control
2 points: Aroma not favorable
1 point: Aroma particularly unfavorable.

The results are shown in Table 1.

**Table 1**

| | Sample added | Amount of Addition (g) | Sensory evaluation | Significant difference test |
|---|---|---|---|---|
| Control | - | - | 3.0 | - |
| Bread (1) | Caproic acid | 0.1 | 1.6 | a |
| Bread (2) | Agent for improving the keeping quality A | 5.0 | 3.6 | a,b |
| Bread (3) | Agent for improving the keeping quality B | 5.0 | 3.2 | - |

| | | | | |
|---|---|---|---|---|
| a: Significantly different from control with significance level of 5% or less b: Significantly different from Bread (3) with significance level of 5% or less | | | | |

As is apparent from Table 1, in the loaf of bread to which caproic acid was added [Bread (1)], the aroma was deteriorated compared with that of the bread containing no additive (control), whereas when the agents for improving the keeping quality A and B were added, loaves of bread each having an improved aroma [Bread (2) and (3)] were obtained.
Further, when the agent for improving the keeping quality A was added, a loaf of bread having a significantly improved aroma [Bread (2)] was obtained compared with the case where the agent for improving the keeping quality B was added.
(b) Each loaf of bread obtained in Example 2 was cut into slices 17 mm thick.
Four slices of each loaf of bread were used, and a suspension of the spores of Penicillium expansum ATCC 1117 prepared by suspending the spores in a 0.1% (v/v) Tween 80 solution at a density of 5 x 10² spores/ml was inoculated onto one side of each slice.

The spore suspension was inoculated onto 25 spots on the surface of each slice in an amount of 10 *µ*l per spot.

Penicillium expansum, which is a blue mold, is a common mold growing over bread.

The suspension of the spores of Penicillium expansum ATCC 1117 was prepared in the following manner.

One loopful of Penicillium expansum ATCC 1117 was inoculated on a slant medium prepared by adding 20 g of malt extract, 20 g of glucose, 1 g of peptone and 20 g of agar to 1 l of water and sterilizing the mixture at 120°C for 20 minutes, and cultured at 25°C for 7 days. To the slant medium was added 5 ml of a 0.1% (v/v) Tween 80 solution to suspend the spores. The resulting suspension was centrifuged to collect the spores, which were then washed twice with a 0.1% (v/v) Tween 80 solution. To the washed spores was added 5 ml of a 0.1% (v/v) Tween 80 solution to suspend the spores, and the resulting suspension was passed through a 40 *µ*m cell strainer (manufactured by FALCON) twice.

The spore suspension thus obtained was added to a 15% (v/v) glycerol solution to a density of 5 x 10⁶ spores/ml and stored in a frozen state at -80°C until the time of use.

Sporulation on the surface of the slices of bread was observed and the time (days) required for sporulation was measured by allowing the slices of bread onto which the spore suspension of Penicillium expansum ATCC 1117 was inoculated to stand at 25°C. Observation of the mold was carried out twice a day (morning and evening) and the number of spots where sporulation was confirmed was counted.

Fig. 1 shows time-lapse changes in the number of spots (100 in total) where sporulation was observed.

As shown in Fig. 1, delay in sporulation was observed by the addition of caproic acid and the agents for improving the keeping quality A and B as compared with control. Particularly, the effect of the addition of the agent for improving the keeping quality A to delay sporulation was considerable.

### Test Example 2

Sensory evaluation was conducted on the loaves of Bread (4) and Bread (5) obtained in Example 4 by 15 skilled panelists using 5-point scoring system.

Evaluation was carried out based on the following criteria with the aroma of the control bread designated as 3 points, and t-test was conducted.
5 points: Aroma particularly favorable
4 points: Aroma favorable
3 points: Aroma almost equal to that of control
2 points: Aroma not favorable
1 point: Aroma particularly unfavorable.
The results are shown in Table 2.

**Table 2**

| | Sample added | Amount of Addition (g) | Sensory evaluation | Significant difference test |
|---|---|---|---|---|
| Control | - | - | 3.0 | - |
| Bread (4) | Agent for improving the keeping quality C | 5.0 | 4.0 | a,b |
| Bread (5) | Agent for improving the keeping quality D | 5.0 | 3.4 | a |

| | | | | |
|---|---|---|---|---|
| a: Significantly different from control with significance level of 5% or less b: Significantly different from Bread (5) with significance level of 5% or less | | | | |

As is apparent from the above results, the aroma of the bread to which the agents for improving the keeping quality C and D were added [Bread (4) and Bread (5)] was significantly improved compared with that of the bread to which no additive was added (control).

Further, the aroma of the bread to which the agent for improving the keeping quality C was added [Bread (4)] was significantly improved compared with the bread to which the agent for improving the keeping quality D was added [Bread (5)].

### Industrial Applicability

According to the present invention, an agent for improving the keeping quality of food and drink having good flavor, food and drink having improved keeping quality and a method for producing the food and drink can be provided.

## Claims

1. An agent for improving the keeping quality of food and drink, which comprises a lipase-treated matter of a reaction product obtained by reacting the cells of a lactic acid bacterium with oil and fat in an aqueous medium.

2. The agent for improving the keeping quality according to Claim 1, wherein the aqueous medium comprises raw milk, skim milk powder or whole milk powder.

3. The agent for improving the keeping quality according to Claim 1 or 2, wherein the lactic acid bacterium is one or more kinds of lactic acid bacteria selected from the group consisting of the genera Lactobacillus, Lactococcus, Streptococcus, Leuconostoc, Pediococcus, Enterococcus and Tetragenococcus.

4. The agent for improving the keeping quality according to any one of Claims 1 to 3, wherein the oil and fat is butter.

5. The agent for improving the keeping quality according to any one of Claims 1 to 4, wherein the food and drink is bread.

6. The agent for improving the keeping quality according to any one of Claims 1 to 5, wherein the agent for improving the keeping quality is an anti-mold agent.

7. A food and drink containing the agent for improving the keeping quality according to any one of Claims 1 to 6.

8. A method for improving the keeping quality of food and drink, which comprises adding, to the food and drink, a lipase-treated matter of a reaction product obtained by reacting the cells of a lactic acid bacterium with oil and fat in an aqueous medium.

9. The method according to Claim 8, wherein the aqueous medium comprises raw milk, skim milk powder or whole milk powder.

10. The method according to Claim 8 or 9, wherein the lactic acid bacterium is one or more kinds of lactic acid bacteria selected from the group consisting of the genera Lactobacillus, Lactococcus, Streptococcus, Leuconostoc, Pediococcus, Enterococcus and Tetragenococcus.

11. The method according to any one of Claims 8 to 10, wherein the oil and fat is butter.

12. The method according to any one of Claims 8 to 11, wherein the food and drink is bread.

13. The method according to any one of Claims 8 to 12, wherein the method for improving the keeping quality is an anti-mold method.

14. A method for producing food and drink, which comprises adding, to the food and drink, a lipase-treated matter of a reaction product obtained by reacting the cells of a lactic acid bacterium with oil and fat in an aqueous medium.

15. The method according to Claim 14, wherein the aqueous medium comprises raw milk, skim milk powder or whole milk powder.

16. The method according to Claim 14 or 15, wherein the lactic acid bacterium is one or more kinds of lactic acid bacteria selected from the group consisting of the genera Lactobacillus, Lactococcus, Streptococcus, Leuconostoc, Pediococcus, Enterococcus and Tetragenococcus.

17. The method according to any one of Claims 14 to 16, wherein the oil and fat is butter.

18. The method according to any one of Claims 14 to 17, wherein the food and drink is bread.

19. A food and drink obtained by the method according to any one of Claims 14 to 18.

20. A bread comprising a lipase-treated matter of a reaction product obtained by reacting the cells of a lactic acid bacterium with oil and fat in an aqueous medium.

21. The bread according to Claim 20, wherein the aqueous medium comprises raw milk, skim milk powder or whole milk powder.

22. The bread according to Claim 20 or 21, wherein the lactic acid bacterium is one or more kinds of lactic acid bacteria selected from the group consisting of the genera Lactobacillus, Lactococcus, Streptococcus, Leuconostoc, Pediococcus, Enterococcus and Tetragenococcus.

23. The bread according to any one of Claims 20 to 22, wherein the oil and fat is butter.
